# EUROPEAN PATENT SPECIFICATION

(11) **EP 2 560 885 B1**
(45) Date of publication and mention of the grant of the patent: **14.05.2014**
(21) Application number: 11754936.0
(22) Date of filing: 28.06.2011
(51) Int. Cl.: B65C 9/00, F16P 3/02

(54) **LABELLING MACHINE WITH CARROUSEL**
ETIKETTIERUNGSMASCHINE MIT KARUSSELL
MACHINE D'ÉTIQUETAGE DOTÉE D'UN CARROUSEL

(43) Date of publication of application: 27.02.2013
(73) Proprietor: Kosme S.r.L., 46048 Roverbella (Mantova) (IT)
(72) Inventor: BRIVIO, Fabio, 20081 Abbiategrasso, Milano (IT); CATTABRIGA, Denis, 46043 Castiglione Delle Stiviere, Mantova (IT)
(74) Representative: Ponchiroli, Simone
(86) International application number: PCT/IT2011/000221
(87) International publication number: WO 2013/001551

(56) References cited:
- WO-A1-2007/025592
- WO-A1-2010/099822
- WO-A1-2011/154980
- DE-U1- 8 903 884
- DE-U1- 20 214 280
- US-A- 3 988 980
- US-A1- 2007 113 991

## Description

This invention relates to a labelling machine according to the preamble of claim 1 with a carrousel of the type in which the labelling devices 9 can be coupled to the carrousel in a plurality of different angular positions, in such a way as to adapt the machine to different requirements.

A labelling machine according to the preamble of claim 1 is known from WO 2010/099822 A1.

Other labelling machines are described for example in patent applications WO 2011/027372, WO 2011/045818 and PCT/IT2011/000054 by this Applicant.

Similarly to conventional labelling machines, these machine must also guarantee suitable safety standards during operation. In particular, during machine operation any accidental access by an operator to the carrousel should be prevented.

In conventional labelling machines, with fixed labelling devices 9, the necessary safety is achieved by fitting the machine with suitable protective structures able to move between an operating position in which they prevent access to the carrousel, and a home position in which they allow access. Normally, such protective structures are in the form of doors which can be opened.

However, that solution is completely unsuitable for machines with interchangeable labelling devices 9, where, depending on requirements, at a certain angular position there may or may not be a labelling device 9.

In this context the technical purpose which forms the basis of this invention is to provide a labelling machine with a carrousel which overcomes the above-mentioned disadvantages.

In particular, the technical purpose of this invention is to provide a labelling machine with a carrousel which allows suitable operator protection, at the same time guaranteeing complete versatility.

The technical purpose specified and the aims indicated are substantially achieved by a labelling machine with a carrousel as described in the appended claims.

Further features and the advantages of this invention are more apparent in the detailed description, with reference to the accompanying drawings which illustrate several preferred, non-limiting embodiments of a labelling machine with a carrousel, in which:
- Figure 1 is an axonometric view of a labelling machine made according to this invention;
- Figure 2 is an enlarged view of the detail II from Figure 1;
- Figure 3 illustrates the machine of Figure 1 without the labelling devices 9;
- Figure 4 illustrates the protective structure of an alternative embodiment of the machine of Figure 3;
- Figure 5 illustrates a part of the protective structure of Figure 4;
- Figure 6 is a partly exploded view of a part of an alternative embodiment of the detail from Figure 5;
- Figure 7 is an enlarged view of the detail VII from Figure 4;
- Figure 8 illustrates an alternative embodiment of the protective structure of Figure 4 equipped with the detail illustrated in Figure 6;
- Figure 9 illustrates an alternative embodiment of the machine of Figure 3, equipped with the protective structure of Figure 8;
- Figure 10 illustrates an alternative embodiment of the machine of Figure 1 equipped with the protective structure of Figure 4 in the home position (and without the part illustrated in Figure 5);
- Figure 11 is an axonometric front view of a masking device which is optionally part of the machine according to this invention; and
- Figure 12 is a rear view of the masking device of Figure 11.

With reference to the accompanying drawings, the numeral 1 denotes in its entirety a labelling machine 1 with a carrousel made in accordance with this invention.

As shown in the accompanying drawings, the labelling machine 1 according to this invention, like all of the prior art labelling machines, comprises a main supporting frame 2 which supports both a rotary carrousel 3 mounted on it, and means 4 for feeding the products to be labelled and for picking up the labelled products (of the known type and therefore not illustrated in detail). Also mounted on the main frame 2 there is a protective structure 5 described in more detail below.

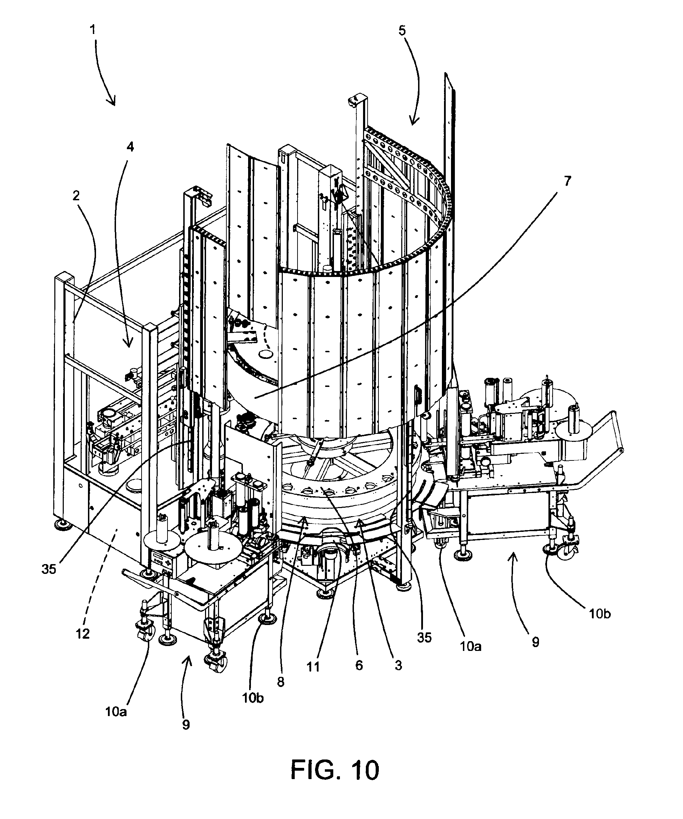

The carrousel 3 (also of the known type) mainly comprises a lower rotary body 6 and an upper rotary body 7 which are rigidly connected so that they rotate together about a vertical central axis of rotation, and is equipped at its periphery with supporting means 8 for supporting objects to be labelled. In the accompanying drawings, which relate to a labelling machine 1 for bottles, of said supporting means 8 only the seats corresponding to the positioning of each bottle on the lower rotary body 6 (Figure 10) are visible, whilst the parts fixed to the upper rotary body 7, which retain the bottles, are not visible.

Also in the known way, the labelling machine 1 also comprises one or more labelling devices 9 which can be removably associated with the periphery of the carrousel 3 for labelling the objects placed on the carrousel 3, when said objects pass each device 9.

In particular, according to this invention, the labelling machine 1 is of the type with interchangeable devices. That means that each labelling device 9 may be positioned in a plurality of different angular positions along the periphery of the carrousel 3. In general, this invention may be applied both to labelling machines in which the possible angular positions of the labelling devices 9 relative to the central axis of rotation are predetermined (as in the embodiments illustrated), and to machines in which said positions may be varied freely, as in the case described for example in patent application WO 2011/027372 by this Applicant. As is explained in more detail below, in both cases what changes is only the shape of the protective structure 5.

To facilitate its movement, in the known way the bottom of each labelling device 9 is equipped with both transport wheels 10a and parking feet 10b which can be alternately put in contact with the ground.

The structure of the individual labelling devices 9 is of the known type and therefore is not described in further detail. It should be noticed only that while the accompanying drawings only show labelling devices 9 for the application of self-adhesive labels, this invention may also be used without distinction with labelling devices 9 which use glue or of another type.

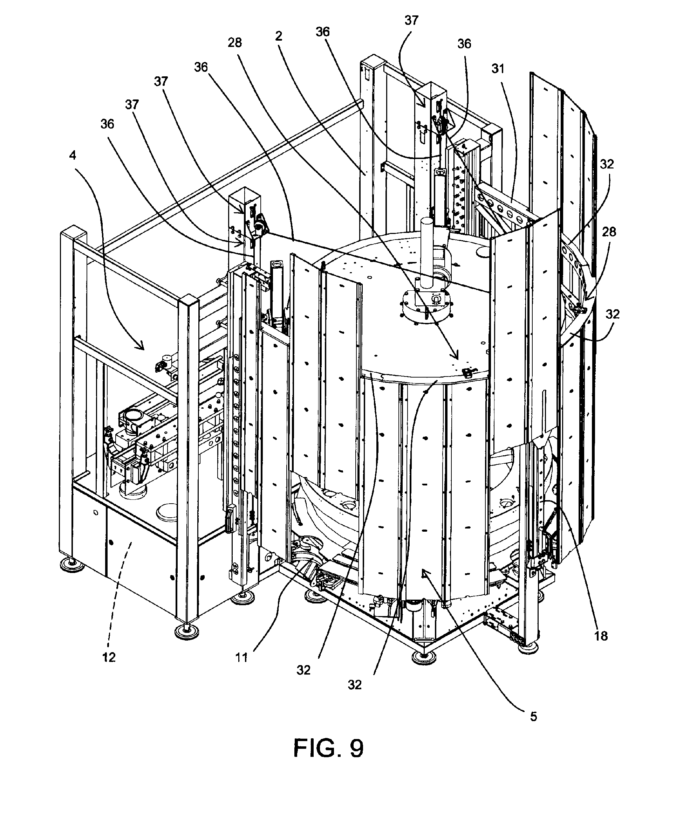

As Figure 9 clearly shows, in all of the embodiments illustrated the possible positions for mounting the labelling devices 9 are predetermined. Indeed, for that purpose, the machine is fitted, at each position, with a coupling element 11 to which the labelling device 9 can be connected. The structure of this coupling element 11 and the method for fixing the labelling device 9 to it are described in patent application WO 2011/027372. Figure 10 shows four coupling elements 11, two free and two occupied, while a fifth, located on the side of the carrousel 3 opposite to that seen, is not visible.

In the known way, the labelling machine 1 may optionally be equipped with one or more masking devices 38 which can be associated with the carrousel in place of a labelling device 9, for preventing access to the carrousel 3 when the labelling device 9 is removed.

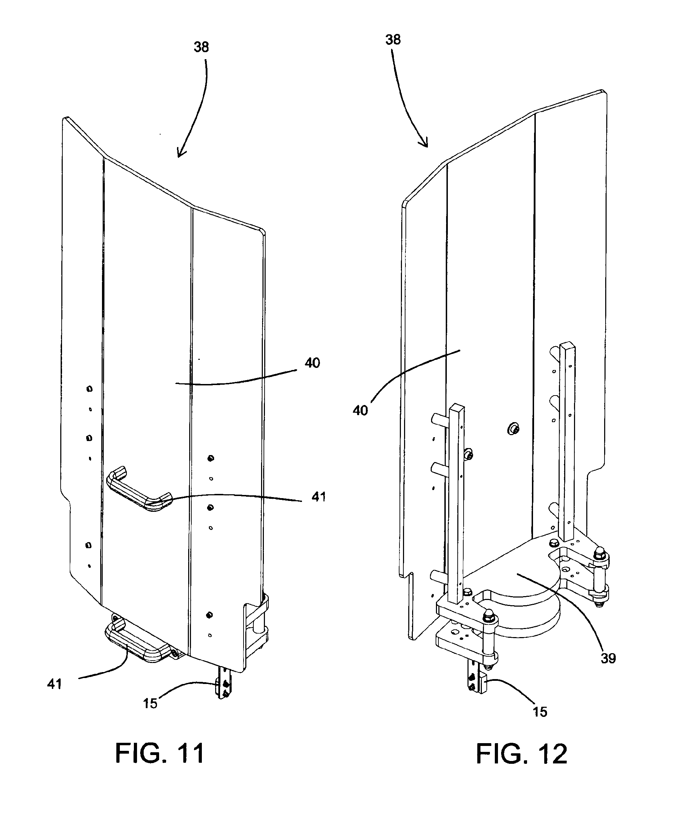

An example of a masking device 38 is illustrated in Figures 11 and 12. As can be seen, it comprises a connecting structure 39 which can be fixed to the main frame 2 (more precisely to a coupling element 11) which supports a closing panel 40 on which there are two movement handles 41.

Like all labelling machines, the machine according to this invention comprises at least one central control unit 12 which is operatively associated at least with the carrousel 3 and with the labelling device 9 for controlling their operation. In the accompanying drawings, the central control unit 12 is not visible, since it is mounted inside the main supporting frame 2.

With regard to the innovative aspects of this invention, the labelling machine 1 firstly comprises first detector means 13 operatively connected to the central control unit 12 for indicating to the control unit the presence of the one or more labelling devices 9, or of a masking device 38, and its/their angular position relative to the carrousel 3.

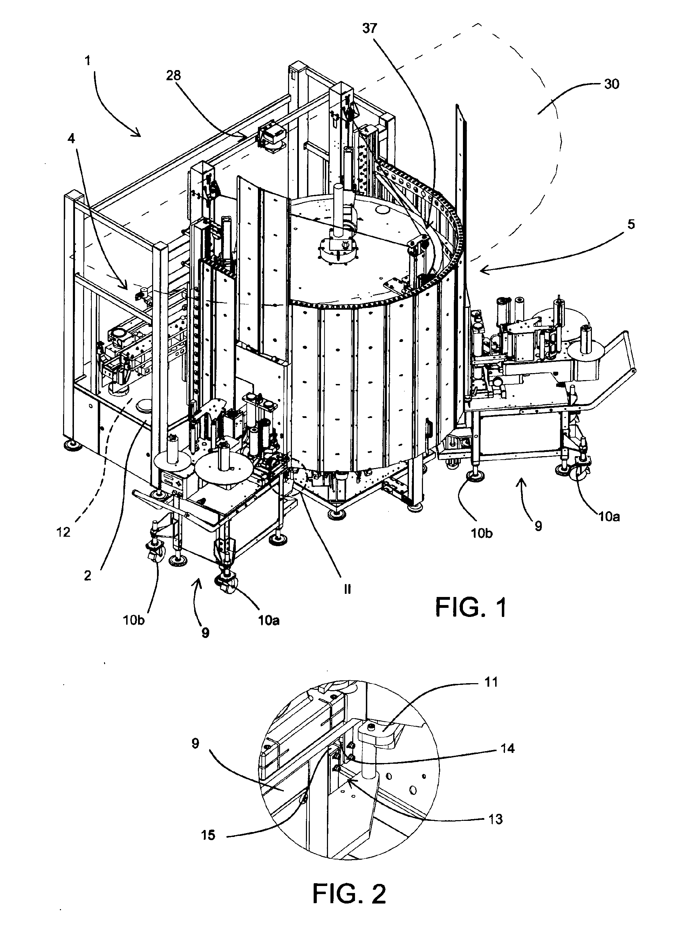

In the embodiment illustrated, in particular, the first detector means 13 comprise a first detector 14 mounted at each possible position for coupling of a labelling device 9 to the carrousel 3, and a first passive element 15 (such as a magnet) which can be detected by the first detector 14, mounted on the labelling device 9. As shown in Figure 2, when the labelling device 9 is correctly coupled to the carrousel 3 the first passive element 15 can be detected by the first detector 14 which then sends a corresponding signal to the central control unit 12. Similarly, as shown in Figures 11 and 12, the masking device is also equipped with a first passive element 15.

Moreover, in the embodiment illustrated the central control unit 12 may identify the angular position of the device 9, or of the masking device 38, simply by knowing beforehand the positions of the various first detector means 13 and verifying from which of these the signal reaches it.

However, in other embodiments other solutions suitable for the purpose may be used. In particular, in the case in which the labelling devices 9 can be positioned in any angular position, the machine must be equipped with suitable devices for recognising their position such as those described in patent application WO 2011/045818.

The second innovative aspect of this invention is the fact that, as already indicated, the labelling machine 1 comprises at least one protective structure 5 mounted on the main supporting frame 2, whose function is to prevent anyone from accessing the moving carrousel 3 during machine operation.

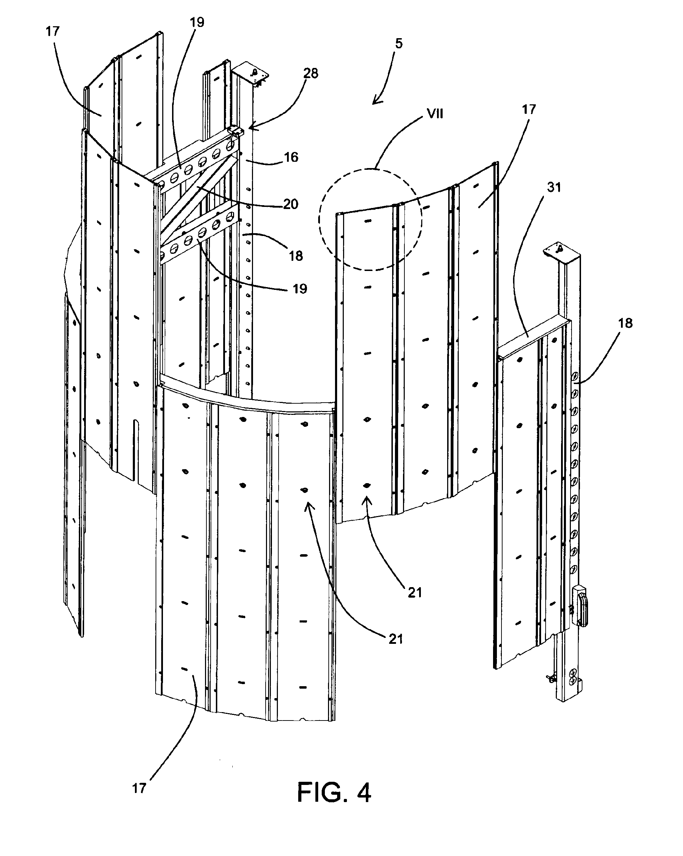

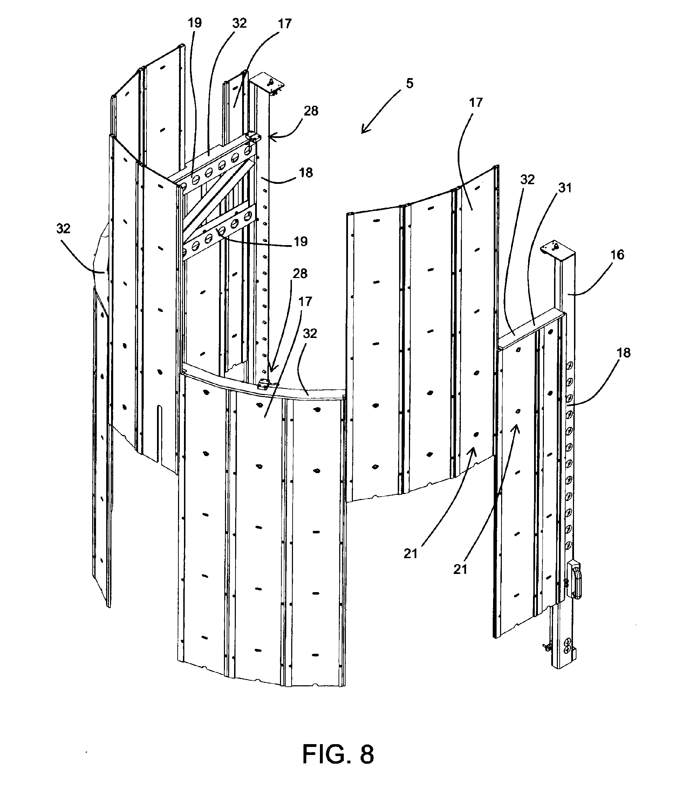

In particular, as shown in the accompanying drawings, according to this invention the protective structure 5 in turn comprises a rigid auxiliary frame 16 on which a plurality of protective elements 17 is mounted, the latter elements being positioned around the carrousel 3. The auxiliary frame 16 comprises three uprights 18 (the central one is not shown in Figures 4 and 8) which, in the embodiment illustrated, are slidably associated with the main frame 2, and two horizontal bars 19 which in plan view are C-shaped, which are vertically superposed one above the other and which are connected to each other by a plurality of stiffening elements 20.

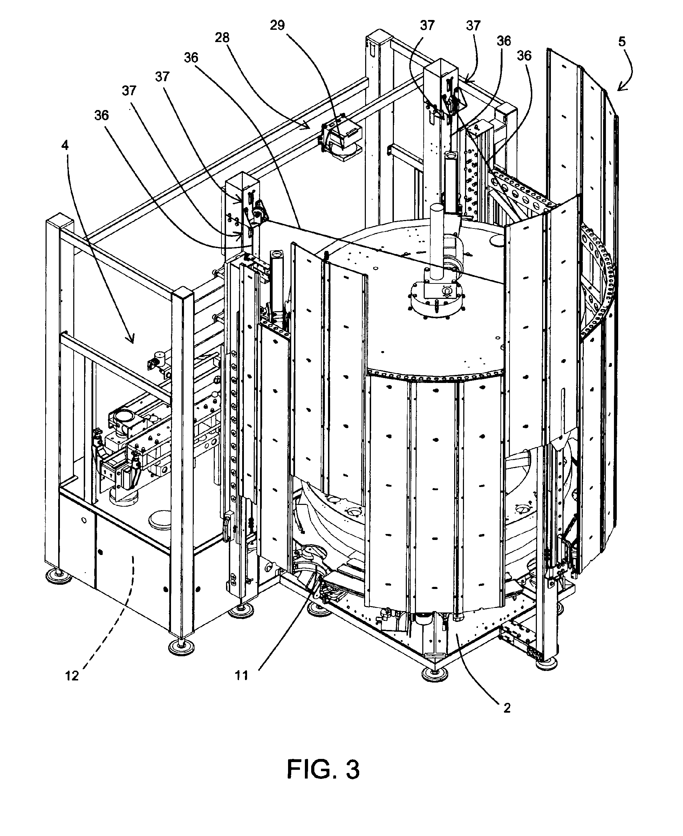

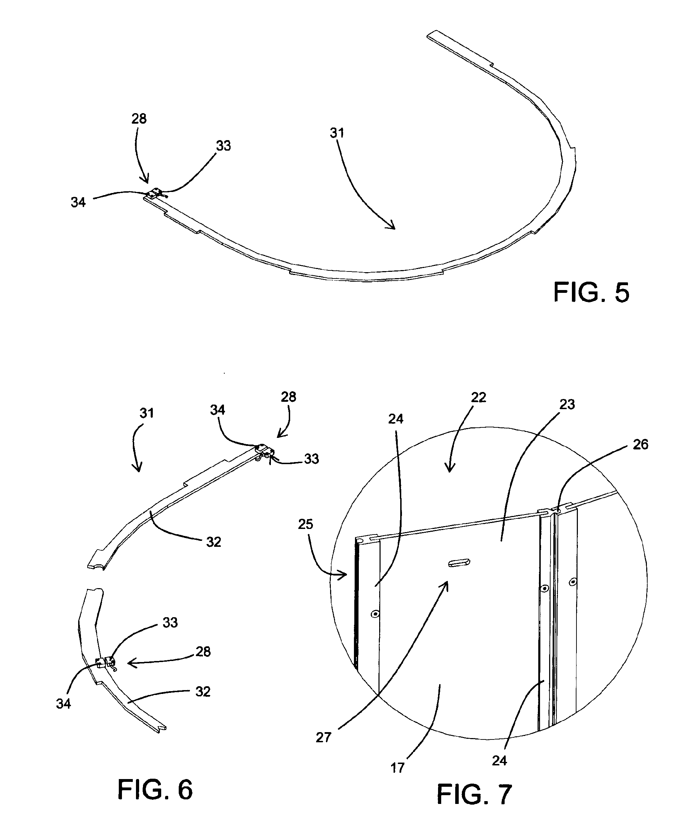

In the embodiment illustrated each protective element 17 is slidably coupled to the adjacent protective elements 17 and is removably fixed to the two horizontal bars 19 by means of suitable through bolts 21. However, in other embodiments, the fixing may also be obtained with other means, for example industrial fixing knobs. In more detail, in the preferred embodiment each protective element 17 advantageously comprises a sheet 22 extending mainly vertically (which may or may not be flat), slidably associated with the rest of the protective structure 5 according to a vertical direction of sliding. Each sheet 22 comprises a panel 23 (for example made of polycarbonate, polymethylmetacrylate or glass) to whose vertical sides two C-shaped profiles 24 are fixed, the outside of the profiles comprising, one an undercut cavity 25, and the other a projection 26 shaped to match the cavity 25 and coupled with the cavity 25 of the profile of the adjacent sheet 22 (Figure 7). In this way, once the fixing to the horizontal bars 19 has been removed, each protective element 17 can be made to slide, relative to the adjacent elements, between a lower first position and an upper second position. Advantageously, the protective element 17 may be removably fixed in each position by means of the through bolts 21 and by means of suitable slots 27 made in the panel 23. Moreover, in the embodiment illustrated, as seen in Figure 3, each protective element 17 comprises a plurality of slots at different heights and can also be fixed in intermediate positions between the lower first position and the maximum upper second position. In this way it is possible to adapt the machine to labelling devices 9 of different sizes. However, in the preferred embodiment, for each protective element 17 there is a single second position.

Therefore, each protective element 17 can move between a first position in which it prevents access to the carrousel 3 from the outside of the machine and at least one second position in which it allows access to the carrousel 3 from the outside of the machine (at least with the protective structure 5 in the operating position, as explained in more detail below).

Relative to the size of the protective elements 17, it should be noticed that in the embodiment illustrated each has a width such that it covers an angle of approximately 15° about the central axis of rotation. However, in other embodiments, said size may vary freely and therefore there may be protective elements 17 which are narrower or wider, the size depending on the versatility of the machine as regards positioning of the labelling devices 9. Moreover, the various protective elements 17 may also be of different sizes to each other. As can be inferred, the smaller the width of the protective elements 17, the greater the machine versatility, since the configuration can be varied with a step equal to the angle occupied by each protective element 17 (steps of 1° can easily be arrived at).

The final distinctive aspect of this invention is the fact that the machine also comprises second detector means 28 (not illustrated in Figure 10) operatively connected to the central control unit 12, for indicating to the control unit at least which protective elements 17 are, or may be, in the respective second position, and the fact that the central control unit 12 is programmed to prevent the labelling machine 1 from operating if there is no match between what is detected by the first detector means 13 and by the second detector means 28.

In particular, the control unit is programmed to prevent the machine from operating when the second detector means 28 detect that at least one protective element 17 located in a predetermined angular position, is or may be in its second position and when, at the same time, the first detector means 13 do not detect anything in said angular position. The programming logic is that of preventing the machine from operating any time there is or may be a possible gap allowing access to the carrousel 3 in a position other than that where a labelling device 9 or a masking device 38 is located. Consequently, only where it is known that a labelling device 9 or a masking device 38 is present, is it possible to tolerate one or more protective elements 17 being located in their second position, since the gap they create is filled by the labelling device 9 or by the masking device 38.

According to this invention, there are two preferred types of second detector means 28, a first type with direct detection, and a second type with indirect detection in which the second detector means 28 are connected to a mechanical system for control of the protective elements 17.

According to the first type, the second detector means 28 comprise one or more sensors which detect the positioning of the protective elements 17 in the second position, or detect that the protective elements 17 are not in the first position.

According to a first embodiment of this first type, not illustrated, the second detector means 28 comprise a detector which is directly associated with each protective element 17. Said detector may in particular have a structure similar to that of the first detector 14 described above and may be positioned in such a way as to detect a corresponding passive element which is fixed to the respective protective element 17, only at the moment when the latter is in its first position.

In contrast, according to a second embodiment of the first type, the second detector means 28 comprise at least one laser scanner 29 with plane angular viewing, located in the upper part of the labelling machine 1 for detecting the presence within its viewing field of protective elements 17 which are located in the respective second position. In laser scanners 29 with plane angular viewing (devices of the known type and available on the market), a laser beam is rapidly oscillated in a plane and allows the detection of objects present in a predetermined adjustable-radius angular sector (normally the angle covered may be 190° or 270°). Consequently, with such a device positioned above the carrousel 3 as illustrated in Figure 1, it is possible to detect any object located within the semi-circular area 30 delimited with a dashed line.

Moreover, the laser scanners 29 can advantageously be programmed in such a way as to only detect one or more parts of the maximum circular sector that can be scanned. In addition, they can advantageously be programmed with a plurality of preset configurations, each corresponding to a different configuration of the labelling machine 1. Alternatively, it is also possible for the laser scanner 29 to always detect the entire circular sector, and to supply the central control unit 12 with information about any location of objects inside it.

It should also be noticed that, to allow safe detection of the protective elements 17, at the design stage it is necessary to size them, and position the laser scanner 29 (or two or more of them), in such a way that they can always be detected when they are in the second position (or in one of the possible second positions).

When the protective elements 17 can adopt more than one second position, two or more laser scanners 29 are required, at different heights, for also checking which second position the elements are in.

Finally, if the protective elements 17 are to be made of transparent material, such as polycarbonate, since said material would not be easy for the laser scanner 29 to detect, it would have to be rendered opaque (for example by applying stickers or sandblasting it) at the zones which intercept the viewing field of the laser scanner 29 when the protective element 17 is in its second position.

With reference to the second type of second detector means 28, as indicated, this is a type in which detection occurs indirectly. In this case the second detector means 28 simply indicate to the control unit if the protective elements 17 could be in the second position. Indeed, as already indicated, in this second case the detector means do not directly detect the protective elements 17, but selective locking elements 31 designed to lock some of the protective elements 17 in the first position, instead leaving the others free to move between the first position and the second position.

Therefore, according to this embodiment, the labelling machine 1 comprises a plurality of selective locking elements 31 which are interchangeable and can be coupled to the protective structure 5. Each of them, once coupled to the protective structure 5, prevents the movement of one or more protective elements 17 from the first position to the second position, according to a different combination. Each combination corresponds to a different machine operating configuration and therefore must be established beforehand, at the design stage.

In the preferred embodiments illustrated in Figures 4 and 8, said selective locking elements 31 are C-shaped and are coupled to the upper part of the protective structure 5. In fact, as can be seen, each selective locking element 31 simply comprises a flat horizontal plate which is mounted on the upper horizontal bar 19 and which has two alternate different widths, a greater width and a lesser width. At its greater width, the plate projects radially relative to the horizontal bar 19 in such a way as to intercept the possible sliding path of the protective element 17, preventing it from moving from the first position. In contrast, at its lesser width, it does not interfere with the sliding path of the respective protective element 17, which can therefore be moved into the second position.

In the embodiment in Figures 4 and 5, the selective locking element 31 is a single piece (a single plate) which covers the entire extension of the carrousel 3.

In contrast, in the case of the embodiment of Figures 6 and 8, each selective locking element 31 comprises a plurality of separate pieces 32 (each of which is a smaller plate) which are mounted on the protective structure 5 one after another. As can be seen for example in Figure 5, to prevent incorrect mounting of the various pieces 32, the ends of each of them may be shaped in such a way that they have a different profile shaped to match only that of the piece 32 (or pieces 32) with which they must be able to connect. Alternatively, each piece 32 forming a selective locking element 31 may also be recognised by the second detector means 28 which may comprise an encoded magnetic sensor, for allowing a check to ensure that the mounting sequence is correct.

In fact, according to these embodiments, the second detector means 28 are operatively associated with the selective locking elements 31 for detecting whether or not they are coupled to the supporting structure and indicating this to the central control unit 12. In particular, as is also shown in Figures 5 and 6, the second detector means 28 comprise a second detector 33 for each piece which may be simultaneously coupled to the protective structure 5. The second detector 33 is fixed to the protective structure 5 and can detect the presence of a second passive element 34 (again, for example a magnet) fixed to the corresponding piece of the selective locking element 31. As already indicated, in some more precise embodiments, the second passive element 34 may be of the recognisable type and different for each piece 32 which must be applied in a predetermined position.

Obviously, the greater the machine versatility required, the greater the number of selective locking elements 31 which must be prepared.

To conclude the structural description of the various embodiments illustrated, it should finally be noticed that the protective structure 5 is in turn able to move between an operating position in which the protective elements 17 placed in the first position prevent access to the carrousel 3 (Figure 1), and a home position in which free access to the carrousel 3 is allowed (Figure 10). In particular, in the embodiment illustrated the protective structure 5 is slidably mounted on the main frame 2 by means of three vertical sliding guides 35 and may therefore slide between the operating position and the home position (the central guide is not shown in Figures 4 and 8). Advantageously, the movement may occur easily manually thanks to a system of counterweights (not connected to the protective structure 5, by means of suitable cables 36 and return elements 37, close to the vertical sliding guides 35, both lateral and central.

Operation of the labelling machine 1 according to this invention is the same as that of the prior art machines as regards the labelling steps.

In contrast, with reference to the use of the protective structure 5 (once it is in the operating position), once the machine configuration has been selected (number and type of labelling devices 9 and if necessary masking devices 38, and relative angular position) the operator positions the protective elements 17 in the correct position and, if required, mounts the correct selective locking element 31. At that point, once the access gaps have been created, the labelling devices 9 and any masking devices 38 required can be installed.

Obviously, the steps described above may also be carried out in a different order.

Once the configuration is complete, the operator can start the machine. At that point, the control unit is activated, comparing the information received from the first detector means 13 and from the second detector means 28 so as to check the compatibility between the position of the labelling devices 9, and/or of the masking devices 38, and the position (or the possible position) of the protective elements 17. If they are compatible, the control unit enables machine operation, meaning that the machine can then continue in the conventional way. If not, the control unit inhibits machine operation until compatibility has been restored by correcting the positioning of the protective elements 17.

This invention brings important advantages.

Indeed, thanks to this invention it was possible to make a machine as versatile as the prior art machines, but at the same time able to guarantee suitable operator protection in any operating configuration.

Finally, it should be noticed that this invention is relatively easy to produce and that even the cost linked to implementing the invention is not very high. The invention described above may be modified and adapted in several ways.

Moreover, all details of the invention may be substituted with other technically equivalent elements and the materials used, as well as the shapes and dimensions of the various components, may vary according to requirements.

## Claims

1. A labelling machine with a carrousel (3), comprising:
a main supporting frame (2);
a rotary carrousel (3) mounted on the main supporting frame (2) and equipped at its periphery with supporting means (8) for supporting objects to be labelled;
one or more labelling devices (9) which can be removably associated with the periphery of the carrousel (3) for labelling the objects placed on the carrousel (3), when the objects pass the labelling devices; it being possible to position the one or more labelling devices (9) in a plurality of different angular positions along the periphery of the carrousel (3);
at least one central control unit (12) operatively associated at least with the carrousel (3) and with the labelling device (9) for controlling their operation; and,
optionally, one or more masking devices (38) which can be associated with the carrousel (3) in place of a labelling device (9);
at least one protective structure (5) mounted on the main supporting frame (2), the structure in turn comprising a pluralit of protective elements (17) arranged around the carrousel (3);
**characterised in that**:
each protective structure is able to slide between a lower first position in which, in its own correspondence, it prevents access to the carrousel (3) from the outside of the machine and an upper second position in which, in its own correspondence, it allows access to the carrousel (3) from the outside of the machine; and **in that** it comprises
first detector means (13) operatively connected to the central control unit (12) for indicating to the control unit the presence of the one or more labelling devices (9), and/or of masking devices (38), and its/their angular position relative to the carrousel (3);
second detector means (28) operatively connected to the central control unit (12), for indicating to the control unit at least which protective elements (17) are, or could be, in the second position;
the central control unit (12) being programmed to prevent the labelling machine (1) from operating when the second detector means (28) detect that at least one protective element (17), located in an angular position where the first detector means (13) do not detect a labelling device (9) or a masking device (38), is or may be in its second position.

2. The labelling machine according to claim 1, **characterised in that** the one or more labelling devices (9) and, if present, the one or more masking devices (38) are mounted at gaps defined by protective elements (17) positioned in their upper second position.

3. The labelling machine according to claim 1 or 2, **characterised in that** each protective element (17) is slidably coupled to the adjacent protective elements (17).

4. The labelling machine according to claim 1, 2 or 3, **characterised in that** each protective element (17) comprises a sheet (22) extending mainly vertically, slidably associated with the rest of the protective structure (5) according to a vertical direction of sliding, and being able to move between the lower first position and at least one upper second position.

5. The labelling machine according to claim 1, 2, 4 or 4, **characterised in that** the second detector means (28) comprise one or more sensors which detect the positioning of the protective elements (17) in the second position, or detect that the protective elements (17) are not in the first position.

6. The labelling machine according to claims 4 and 5, **characterised in that** the second detector means (28) comprise at least one laser scanner (29) with plane angular viewing, located above the machine for detecting the presence within its viewing field of protective elements (17) which are located in the respective second position.

7. The labelling machine according to claim 1, 2, 3 or 4, **characterised in that** it also comprises a plurality of selective locking elements (31), interchangeable, which can be coupled to the protective structure (5) each for preventing the movement of one or more protective elements (17) from the first position to the second position, the second detector means (28) being operatively coupled to the selective locking elements (31) for detecting their coupling to the supporting structure and indicating it to the central control unit (12).

8. The labelling machine according to claims 4 and 7, **characterised in that** the selective locking elements (31) are C-shaped and are coupled to the upper part of the protective structure (5).

9. The labelling machine according to claim 7 or 8, **characterised in that** each selective locking element (31) comprises a single piece or a plurality of pieces (32).

10. The labelling machine according to claim 9, **characterised in that** the second detector means (28) comprise a detector for each piece which may be simultaneously coupled to the protective structure (5).

11. The labelling machine according to claim 5, **characterised in that** the second detector means (28) comprise a detector directly associated with each protective element (17).

12. The labelling machine according to any of the foregoing claims, **characterised in that** the protective structure (5) is in turn able to move between an operating position in which the protective elements (17) placed in the first position prevent access to the carrousel (3), and a home position in which free access to the carrousel (3) is allowed.

## Patentansprüche

1. Etikettierungsmaschine mit einem Karussell (3), enthaltend:
- einen Hauptträgerrahmen (2);
- ein Drehkarussell (3), montiert an dem Hauptträgerrahmen (2) und ausgestattet an seinem Umlauf mit Haltemitteln (8) zum Halten von zu etikettierenden Gegenständen;
- eine oder mehrere Etikettiervorrichtungen (9), welche abnehmbar dem Umlauf des Karussells (3) zugeordnet werden können, und zwar zum Etikettieren der an dem Karussell (3) angeordneten Gegenstände, wenn die Gegenstände an den Etikettiervorrichtungen vorbeilaufen; wobei es möglich ist, eine oder mehrere Etikettiervorrichtungen (9) in einer Vielzahl von unterschiedlichen Winkelpositionen entlang dem Umlauf des Karussells (3) zu positionieren;
- wenigstens eine zentrale Steuereinheit (12), betrieblich wenigstens dem Karussell (3) und der Etikettiervorrichtung (9) zugeordnet, um deren Betrieb zu steuern; und
- als Option eine oder mehrere Abdeckvorrichtungen (38), welche anstelle einer Etikettiervorrichtung (9) dem Karussell (3) zugeordnet werden können;
- wenigstens eine Schutzstruktur (5), montiert an dem Hauptträgerrahmen (2), wobei die Struktur wiederum eine Anzahl von Schutzelementen (17) enthält, die rings um das Karussell (3) angeordnet sind;
**dadurch gekennzeichnet, dass**
- jede Schutzstruktur in der Lage ist, zwischen einer unteren ersten Position, in welcher sie ihrer Entsprechung nach den Zugang zum Karussell (3) von ausserhalb der Maschine verhindert, und einer oberen zweiten Position gleiten kann, in welcher sie ihrer Entsprechung nach den Zugang zum Karussell (3) von ausserhalb der Maschine erlaubt; und dadurch, dass sie wie folgt enthält:
- erste Abtastmittel (13), die betrieblich an die zentrale Steuereinheit (12) angeschlossen sind, um der Steuereinheit das Vorhandensein von einer oder mehreren Etikettiervorrichtungen (9) und/oder Abdeckvorrichtungen (38) und deren jeweilige Winkelposition im Verhältnis zu dem Karussell (3) anzuzeigen;
- zweite Abtastmittel (28), betrieblich an die zentrale Steuereinheit (12) angeschlossen, um der Steuereinheit wenigstens anzuzeigen, welche Schutzelemente (17) sich in der zweiten Position befinden oder befinden könnten;
wobei die zentrale Steuereinheit (12) programmiert ist, um die Etikettierungsmaschine (1) am Betrieb zu hindern, wenn die zweiten Abtastmittel (28) erfassen, dass wenigstens ein Schutzelement (17), angeordnet in einer Winkelposition, in welcher die ersten Abtastmittel (13) keine Etikettiervorrichtung (9) oder Abdeckvorrichtung (38) erfassen, sich in der zweiten Position befindet oder befinden könnte.

2. Etikettierungsmaschine nach Patentanspruch 1, **dadurch gekennzeichnet, dass** die eine oder mehrere Etikettiervorrichtungen (9) und, falls vorhanden, die eine oder mehrere Abdeckvorrichtungen (38) an Lücken montiert sind, die von den Schutzelementen (17) beschrieben werden, wenn diese sich in ihrer oberen zweiten Position befinden.

3. Etikettierungsmaschine nach Patentanspruch 1 oder 2, **dadurch gekennzeichnet, dass** jedes Schutzelement (17) gleitbar mit den angrenzenden Schutzelementen (17) verbunden ist.

4. Etikettierungsmaschine nach Patentanspruch 1, 2 oder 3, **dadurch gekennzeichnet, dass** jedes Schutzelement (17) eine sich vorwiegend senkrecht erstreckende Platte (22) enthält, gleitbar der übrigen Schutzstruktur (5) zugeordnet, und zwar in Übereinstimmung mit einer vertikalen Gleitrichtung, wobei es in der Lage ist, sich zwischen der unteren ersten Position und wenigstens einer oberen zweiten Position zu bewegen.

5. Etikettierungsmaschine nach Patentanspruch 1, 2, 3 oder 4, **dadurch gekennzeichnet, dass** die zweiten Abtastmittel (28) einen oder mehrere Fühler enthalten, welche die Anordnung der Schutzelemente (17) in der zweiten Position erfassen, oder die erfassen, dass sich die Schutzelemente (17) nicht in der ersten Position befinden.

6. Etikettierungsmaschine nach den Patentansprüchen 4 und 5, **dadurch gekennzeichnet, dass** die zweiten Abtastmittel (28) wenigstens einen Laserscanner (29) mit ebener Winkeleinsicht enthalten, angeordnet oberhalb der Maschine, um das Vorhandensein im Bereich seines Einsichtfeldes der in der jeweiligen zweiten Position angeordneten Schutzelemente (17) zu erfassen.

7. Etikettierungsmaschine nach Patentanspruch 1, 2, 3 oder 4, **dadurch gekennzeichnet, dass** sie ebenfalls eine Anzahl von selektiven und austauschbaren Feststellelementen (31) enthält, welche an die Schutzstrukturen (5) angeschlossen werden können, jedes zum Verhindern der Bewegung von einem oder mehreren Schutzelementen (17) aus der ersten Position in die zweite Position, wobei die zweiten Abtastmittel (28) betrieblich mit den selektiven Feststellelementen (31) verbunden sind, um deren Anschluss an die Trägerstruktur zu erfassen und dies der zentralen Steuereinheit (12) anzuzeigen.

8. Etikettierungsmaschine nach den Patentansprüchen 4 und 7, **dadurch gekennzeichnet, dass** die selektiven Feststellelemente (31) C-förmig und an den oberen Teil der Schutzstruktur (5) angeschlossen sind.

9. Etikettierungsmaschine nach Patentanspruch 7 oder 8, **dadurch gekennzeichnet, dass** jedes selektive Feststellelement (31) ein einziges Teil oder mehrere Teile (32) enthält.

10. Etikettierungsmaschine nach Patentanspruch 9, **dadurch gekennzeichnet, dass** die zweiten Abtastmittel (28) einen Fühler für jedes Teil enthalten, welches gleichzeitig an die Schutzstruktur (5) angeschlossen sein kann.

11. Etikettierungsmaschine nach Patentanspruch 5, **dadurch gekennzeichnet, dass** die zweiten Abtastmittel (28) einen Fühler enthalten, der direkt einem jeden Schutzelement (17) zugeordnet ist.

12. Etikettierungsmaschine nach einem jeden der vorstehenden Patentansprüche, **dadurch gekennzeichnet, dass** die Schutzstruktur (5) wiederum in der Lage ist, sich zwischen einer Betriebsposition, in welcher die in der ersten Position angeordneten Schutzelemente (17) den Zugang zu dem Karussell (3) verhindern, und einer Ruheposition zu bewegen, in welcher ein freier Zugang zu dem Karussell (3) erlaubt ist.

## Revendications

1. Une machine d'étiquetage dotée d'un carrousel (3), comprenant :
un châssis de support principal (2) ;
un carrousel rotatif (3) monté sur le châssis de support principal (2) et équipé, sur sa périphérie, de moyens de support (8) destinés à supporter des objets à étiqueter ;
un ou plusieurs dispositifs d'étiquetage (9) qui peuvent être associés de façon amovible avec la périphérie du carrousel (3) pour étiqueter les objets placés sur ledit carrousel (3), quand lesdits objets passent au niveau des dispositifs d'étiquetage ; ledit un ou plusieurs dispositifs d'étiquetage (9) pouvant être positionnés dans une pluralité de positions angulaires différentes le long de la périphérie du carrousel (3) ;
au moins une unité centrale de contrôle (12) opérationnellement associée au moins avec le carrousel (3) et avec le dispositif d'étiquetage (9) pour contrôler leur fonctionnement ; et,
en option, un ou plusieurs dispositifs de masquage (38) qui peuvent être associés avec le carrousel (3) à la place d'un dispositif d'étiquetage (9) ;
au moins une structure de protection (5) montée sur le châssis de support principal (2), la structure comprenant à son tour une pluralité d'éléments de protection (17) disposés autour du carrousel (3) ;
**caractérisée en ce que** :
chaque structure de protection peut coulisser entre une première position basse dans laquelle, à son propre niveau, elle empêche l'accès au carrousel (3) de l'extérieur de la machine, et une deuxième position haute dans laquelle, à son propre niveau, elle permet l'accès au carrousel (3) de l'extérieur de la machine ; et **en ce qu'**elle comprend :
des premiers moyens détecteurs (13) opérationnellement reliés à l'unité centrale de contrôle (12) pour indiquer à cette même unité de contrôle la présence dudit un ou plusieurs dispositifs d'étiquetage (9), et/ou de dispositifs de masquage (38), et sa/leur position angulaire par rapport au carrousel (3) ;
des deuxièmes moyens détecteurs (28) opérationnellement reliés à l'unité centrale de contrôle (12), pour indiquer à cette même unité de contrôle au moins quels éléments de protection (17) sont, ou pourraient être, dans la deuxième position ;
l'unité centrale de contrôle (12) étant programmée pour empêcher la machine d'étiquetage (1) de fonctionner quand les deuxièmes moyens détecteurs (28) détectent qu'au moins un élément de protection (17), situé dans une position angulaire où les premiers moyens détecteurs (13) ne détectent pas un dispositif d'étiquetage (9) ou un dispositif de masquage (39), est ou pourrait être dans sa deuxième position.

2. La machine d'étiquetage selon la revendication 1, **caractérisée en ce que** ledit un ou plusieurs dispositifs d'étiquetage (9) et, si présent, ledit un ou plusieurs dispositifs de masquage (38) sont montés selon des intervalles définis par des éléments de protection (17) positionnés dans leur deuxième position haute.

3. La machine d'étiquetage selon la revendication 1 ou 2, **caractérisée en ce que** chaque élément de protection (17) est accouplé de façon coulissante avec les éléments de protection (17) adjacents.

4. La machine d'étiquetage selon la revendication 1, 2 ou 3, **caractérisée en ce que** chaque élément de protection (17) comprend une tôle (22) s'étendant essentiellement à la verticale, associée de façon coulissante au reste de la structure de protection (5) selon une direction verticale de coulissement, et pouvant se déplacer entre la première position basse et au moins un deuxième position haute.

5. La machine d'étiquetage selon la revendication 1, 2, 3 ou 4, **caractérisée en ce que** les deuxièmes moyens détecteurs (28) comprennent un ou plusieurs capteurs qui détectent le positionnement des éléments de protection (17) dans la deuxième position, ou détectent que les éléments de protection (17) ne sont pas dans la première position.

6. La machine d'étiquetage selon les revendications 4 et 5, **caractérisée en ce que** les deuxièmes moyens détecteurs (28) comprennent au moins un scanner laser (29) à vision angulaire plane, situé au-dessus de la machine pour détecter la présence dans son champ de vision des éléments de protection (17) qui sont situés dans la deuxième position respective.

7. La machine d'étiquetage selon la revendication 1, 2, 3 ou 4, **caractérisée en ce qu'**elle comprend aussi une pluralité d'éléments de blocage sélectif (31), interchangeables, qui peuvent être accouplés avec la structure de protection (5) pour empêcher, chacun, le déplacement d'un ou de plusieurs éléments de protection (17) de la première position à la deuxième position, les deuxièmes moyens détecteurs (28) étant opérationnellement accouplés avec les éléments de blocage sélectif (31) pour détecter leur accouplement avec la structure de support et l'indiquer à l'unité centrale de contrôle (12).

8. La machine d'étiquetage selon les revendications 4 et 7, **caractérisée en ce que** les éléments de blocage sélectif (31) ont une forme en « C » et sont accouplés avec la partie supérieure de la structure de protection (5).

9. La machine d'étiquetage selon la revendication 7 ou 8, **caractérisée en ce que** chaque élément de blocage sélectif (31) comprend une seule pièce ou une pluralité de pièces (32).

10. La machine d'étiquetage selon la revendication 9, **caractérisée en ce que** les deuxièmes moyens détecteurs (28) comprennent un détecteur pour chaque pièce qui peut être simultanément accouplée avec la structure de protection (5).

11. La machine d'étiquetage selon la revendication 5, **caractérisée en ce que** les deuxièmes moyens détecteurs (28) comprennent un détecteur directement associé à chaque élément de protection (17).

12. La machine d'étiquetage selon l'une quelconque des revendications précédentes, **caractérisée en ce que** la structure de protection (5) peut à son tour se déplacer entre une position opérationnelle dans laquelle les éléments de protection (17) situés dans la première position empêchent l'accès au carrousel (3), et une position de repos dans laquelle ils permettent un libre accès au carrousel (3).
